# EUROPÄISCHE PATENTSCHRIFT

(11) **EP 3 901 566 B1**
(45) Veröffentlichungstag und Bekanntmachung des Hinweises auf die Patenterteilung: **15.11.2023**
(21) Anmeldenummer: 21169103.5
(22) Anmeldetag: 19.04.2021
(51) Int. Cl.: G01B 7/30, G01B 21/22

(54) **SYSTEM ZUR ERFASSUNG DER RELATIVLAGE ZWISCHEN EINEM AN EINER TRAGSTRUKTUR ANGEBRACHTEN BEFESTIGUNGSANKER UND EINEM ENDSEITIG AM BEFESTIGUNGSANKER ANGEBRACHTEN, GESPANNTEN TRAGSEIL**
SYSTEM FOR DETECTING THE RELATIVE POSITION BETWEEN A FIXING ANCHOR ATTACHED TO A SUPPORTING STRUCTURE AND A TENSIONED CARRYING CABLE ATTACHED TO THE END OF THE FIXING ANCHOR
SYSTEME DE DÉTERMINATION DE LA POSITION RELATIVE ENTRE UNE ANCRE DE FIXATION APPLIQUÉE À UNE STRUCTURE PORTEUSE ET UN CÂBLE PORTEUR TENDU ET APPLIQUÉ À L'EXTRÉMITÉ DE L'ANCRE DE FIXATION

(30) Priorität: 22.04.2020 DE 102020205071
(43) Veröffentlichungstag der Anmeldung: 27.10.2021
(73) Patentinhaber: Fraunhofer-Gesellschaft zur Förderung der angewandten Forschung e.V., 80686 München (DE)
(72) Erfinder: Weingard, Christoph, 66123 Saarbrücken (DE); Theado, Hendrik, 66123 Saarbrücken (DE)
(74) Vertreter: Rösler, Uwe

(56) Entgegenhaltungen:
- JP-A- 2003 063 773
- KR-B1- 101 500 169
- US-A- 4 486 955
- US-A- 5 235 861
- US-A- 5 430 953
- US-A1- 2019 235 011

## Beschreibung

### Technisches Gebiet

Die Erfindung bezieht sich auf ein System zur Überwachung eines Befestigungsanker-Tragseil-Verbundes.

Bei einem Tragseil kann es sich um ein Drahtseil, bspw. aus Stahl, oder um ein synthetisches Seil, bspw. aus Kunststoff, handeln. Des Weiteren kann das Tragseil die Form eines Bandes, bspw. Stahlband, einer Kette, eines Faserseils, eines Riemens oder eines Gurtes annehmen.

Gespannte Tragseile dienen zur Lastaufnahme von stationären oder beweglichen Lasten und sind zu deren Lastabfangung an zwei sich gegenüberliegenden Tragseilendbereichen jeweils an einem mechanisch festen Gegenlager spannkraftbeaufschlagt befestigt. In urbaner Umgebung gehören gespannte Tragseile zur alltäglichen Stadtkulisse, zumal an ihnen Fahrdrahtleitungen für schienengebundene Fahrzeuge oder Beleuchtungsmittel o. ä. ansonsten freitragend angebracht sind. Zumeist sind derartige gespannte Tragseile mittels sog. Wandanker an Fassaden von Gebäuden oder an mastartigen Tragstrukturen befestigt.

Betriebs- sowie auch alterungsbedingt unterliegen sowohl die gespannten Tragseile als auch die Befestigungsanker mechanischen und witterungsbedingten Einflüssen, die ganz unvermeidbar im Laufe der Zeit zu Degradationserscheinungen sowohl an den Tragseilen als auch an den Befestigungsankern führen. Diese können im schlimmsten Fall zum Versagen der Komponenten führen, wodurch sich ein erhebliches Gefährdungspotential für Menschen sowie die im Umkreis des Schadensortes vorhandene Infrastruktur ausbilden kann.

Derzeitige Schätzungen gehen davon aus, dass ein sehr großer Anteil von Befestigungsankern bereits mehr als 50 Jahren im Betrieb sind, so dass deren Funktions- und Zuverlässigkeitsüberwachung zunehmend in den Fokus der jeweiligen Betreiber bzw. Eigentümer der die gespannten Tragseile umfassenden Infrastruktur rückt.

So kann eine frühzeitige und verlässliche Erkennung von Veränderungen der absoluten sowie auch relativen Lage des Verbundes bestehend aus gespanntem Tragseil und Befestigungsanker dazu beitragen, schon vor einem Totalversagen des Befestigungssystems notwendige Instandsetzungen bzw. Reparaturen zu veranlassen.

### Stand der Technik

Der funktionelle Zustand eines verbauten Befestigungsankers wird typischerweise im Wege einer personengestützten Sichtkontrolle vor Ort sowie durch Sichtkontrolle des Seildurchhangs des gespannten Tragseils überprüft. Üblicherweise wird die Sichtkontrolle mittels Vergrößerungsoptiken, wie bspw. Feldstecher, durchgeführt. Diese Methode ist jedoch entsprechend stark vom subjektiven Eindruck der jeweiligen, die Sichtprüfung durchführenden Person abhängig. Ein übermäßig großer Seildurchhang, bspw. eines die für den Betrieb einer Straßenbahn erforderliche Fahrleitung tragenden Tragseils, wird zumeist erst dann festgestellt, wenn die Straßenbahn das entsprechende Tragseil passiert und es zu Betriebsstörungen kommt.

Auch werden kosten-, zeit- und personalaufwendigere Festigkeitsprüfungen an Wandankern mittels definierter Zugbelastungen durchgeführt. Hierzu muss in der Regel das Prüfpersonal mittels einer Hebebühne an den Befestigungsanker herangefahren werden, das nachfolgend eine Prüfvorrichtung zum Aufbringen einer definierten Zugkraft an den Befestigungsanker installiert.

Aus der Druckschrift WO 2019/147965 A1 sind eine Vorrichtung sowie ein Verfahren zur Lageerfassung von Überlandstromleitungen zu entnehmen, die wenigstens einen berührungslos arbeitenden Abstandssensor vorsehen, bspw. in Form eines LIDAR- oder RADAR-Sensors.

Aus der Druckschrift US 6097298 A sind eine Vorrichtung sowie ein Verfahren zur Überwachung einer Übertragungsleitung zu entnehmen, mit einer bodengebundenen Einheit, bspw. in Form eines Lasers, und einer an der Übertragungsleitung angebrachten Einheit, bspw. in Form eines Reflektors, der das Laserlicht Lageabhängig zu reflektieren vermag.

Eine vergleichbare Anordnung zur Vermessung eines variierenden Durchhanges einer Stromleitung unter Verwendung eines Lasers sowie eines Lichtdetektors, die wahlweise an der Stromleitung sowie ein einem bodengestützten Strommast angebracht sind, ist in der Druckschrift WO 1995/35478 beschrieben.

Ein Winkelpositionssensor ist in der Druckschrift US 4486955 A offenbart, der Teil eines Helmsichtsystems ist und zur Erkennung der Sichtlinie eines Beobachters, bspw. eines Flugzeugpiloten, anhand einer Messung der Position eines vom Beobachter getragenen Helms dient.

US 5 235 861 A offenbart ein System zur Überwachung der Zugspannung von einer an einem Befestigungsanker angebrachten Stromleitung mittels eines Dehnungssensors.

### Darstellung der Erfindung

Der Erfindung liegt die Aufgabe zugrunde, den Festigkeitszustand eines Befestigungsanker -Tragseil-Verbundes ohne erheblichen personellen, technischen und zeitlichen Aufwand zu erfassen, um eine belastbare Aussage über den Betriebs- und Sicherheitszustand des Befestigungsanker-Tragseil-Verbundes treffen zu können. Auf diese Weise sollen Versagenssituationen frühzeitig erkannt werden, bevor eine Gefahr für die Umgehung entsteht.

Die Lösung der der Erfindung zugrundeliegenden Aufgabe ist im Anspruch 1 angegeben. Den Erfindungsgedanken in vorteilhafter Weise weiterbildende Merkmale sind Gegenstand der Unteransprüche sowie der weiteren Beschreibung, insbesondere unter Bezugnahme auf die illustrierten Ausführungsbeispiele zu entnehmen.

Gegenstand der Erfindung ist ein System zur Überwachung eines Befestigungsanker-Tragseil-Verbundes mit einem an Gebäudewänden oder Tragwerkskonstruktionen angebrachten Befestigungsanker für Abspannseile für Straßenbeleuchtungen, oder Abspannseile in Form von Oberleitungen, Hochspannungsleitungen oder Seilbahn-Tragseilen.

Dem lösungsgemäßen System liegt die Idee zugrunde, dass bei einem intakten Befestigungsanker-Tragseil-Verbund die Lastsituation annähernd statisch ist, d.h. das Tragseil geht vom Befestigungsanker unter einem bestimmten Winkel ab, der selbst unter Berücksichtigung von Störgrößen, wie bspw. tagesgangspezifische temperaturabhängige Tragseillängenendungen oder betriebs- oder windeinflussbedingte Vibrationen oder Schwingungen des Seils, im Mittel als konstant angenommen werden kann.

Treten jedoch im Befestigungsanker-Tragseil-Verbund Änderungen auf, die zu einer dauerhaften mechanischen Verformung der einzelnen Komponenten führen, ändert sich auch der Winkel zwischen dem Befestigungsanker und dem Tragseil dauerhaft gegenüber einem Ausgangswinkelwert. Eben diesen Winkel zwischen dem Befestigungsanker und dem vom Befestigungsanker abgehenden gespannten Tragseil oder zumindest eine entsprechende Winkeländerung vermag die lösungsgemäße Vorrichtung zu erfassen, um so potentiell schadhafte Veränderungen im Befestigungsanker-Tragseil-Verbund zu erfassen.

In einer ersten bevorzugten Ausführungsvariante ist der Inkrementalgeber in Form eines Winkelsensors, wie er bspw. in einem Joystick verwendet wird, ausgebildet, der einen Winkel zwischen einer, beide Armenden durchsetzenden Geraden und einer vorgebbaren Raumachse erfasst. Vorzugsweise ist das Armelement geradlinig bspw. stangenförmig ausgebildet und mit dem Tragseil längsbeweglich zu dessen Längserstreckung gefügt. Im Normalzustand schließt die Längserstreckung des Armelementes bspw. mit der vertikalen Raumachse einen durch die Befestigungsgeometrie zwischen Befestigungsanker und dem von diesem abgehenden gespannten Tragseil vorgegebenen Winkel ein.

Kommt es im Laufe der Zeit zu materialbedingten Ermüdungen, bspw. in Form einer intolerablen Längung des Tragseils oder zu einem Ermüdungsbruch im Tragseil-Befestigungsanker-Verbund so ändert sich der vorbezeichnete Winkel in einem Maße, der außerhalb eines betriebsbedingten Toleranzbereiches liegt. Erfährt das gespannte Tragseil bspw. eine materialdegradierende Längung, führt dies zu einer Durchhängung und einer damit verbundenen Winkelreduzierung des Winkels, der von dem einseitig am Tragseil gefügten, stangenförmigen Armelement und der vertikalen Raumrichtung eingeschlossen wird.

Zur messtechnischen Erfassung der vertikalen Raumrichtung weist die Lageerfassungseinheit vorzugsweise einen Beschleunigungssensor auf, der die vertikale Raumachse als eine fest vorgegebene Referenzachse zu definieren vermag.

Das einseitig mit dem Tragseil verbundene Armende ist entweder längsbeweglich relativ zur Längserstreckung des Tragseils gefügt, bspw. durch eine ringförmige Ausbildung am Armelementende, durch das das Tragseil verläuft. In diesem Fall bietet es sich an, das Armelement stangenförmig mit einer unveränderlichen Armelementlänge auszubilden. Alternativ kann das Armelement auch über eine veränderliche Armlänge verfügen, bspw. durch Vorsehen eines Teleskopmechanismus längs des Armelementes. In diesem Fall bietet es sich an, die Fügung des mit dem Drahtseil verbundenen Armelementendes ortsfest relativ zum Tragseil vorzunehmen, wodurch zusätzlich zur vorstehend erläuterten Winkeländerung im Falle eines Schadensfalles das Armelement einer Längenänderung unterliegt. Zudem sieht die in diesem Fall das mit dem Tragseil verbundene Armelement eine am Tragseil angebrachte Gelenkeinheit vor, in Form eines Einachs-, Zweiachs- oder Kugelgelenkes.

Ein längenveränderliches Armelement bietet überdies die Möglichkeit anstelle der Winkelerfassung oder in Kombination mit dieser eine Messung der Längenänderung des Armelements vorzunehmen. In diesem Fall sieht eine weitere Ausführungsform die Verwendung eines Inkrementalgebers in Form eines Längenänderungssensors vor, der die Änderung der Armlänge des Armelementes oder zusätzlich zur Winkelerfassung die Änderung der Armlänge des Armelementes zu erfassen vermag.

Dem ösungsgemäßen System zur Überwachung eines Befestigungsanker-Tragseil-Verbundes leigt insbesondere die Annahme zugrunde, dass bei Eintreten eines Schadensfalles die räumliche Konstellation des Tragseils relativ zum Befestigungsanker einer unabdingbaren Änderung unterliegt, die mittels des wenigstens einen Inkrementalgebers im Rahmen einer Winkel- und/oder Längendetektion, wie vorstehend erläutert, erfassbar ist. Sollte es dennoch zu Schadensfällen kommen, bei denen keinerlei Änderungen in der Relativlage zwischen Tragseil und Befestigungsanker auftreten, so sieht eine bevorzuge Weiterbildung des Überwachungssystems zusätzlich zu dem wenigstens einen Inkrementalgeber einen optischen und/oder schallakustischen Abstandssensor vor, der in oder an der Baueinheit integriert ist und bspw. ein Ablösen des Befestigungsankers von der Tragstruktur zu erfassen vermag. Neben der Anbringung eines Abstandssensors bieten sich darüber hinaus auch die Verwendung wenigstens eines Dehnungsmessstreifens an, der mit der Baueinheit oder mit dem Armelement verbunden ist und auf diese Weise Degradationserscheinungen innerhalb der Baueinheit oder des Armelementes messtechnisch zu erfassen vermag.

Des Weiteren kann mit Hilfe einer an oder in der Baueinheit vorgesehenen Induktionsspule und/oder eines Hallsensors das elektrische und/oder magnetische Feld in unmittelbarer Umgebung des Befestigungsanker-Tragseil-Verbundes messtechnisch erfasst werden und als weitere Messgröße für die Bewertung des Befestigungsanker-Tragseil-Verbundes herangezogen werden.

Das lösungsgemäße System zur Überwachung eines Befestigungsanker-Tragseil-Verbundes lässt sich für eine Vielzahl unterschiedliche Anwendungsfälle einsetzen, wie bspw. zur Überwachung von an Gebäudewänden oder an Tragwerkskonstruktionen angebrachten Befestigungsanker für Abspannseile für die Anbringung von Straßenbeleuchtungen, Ampelanlagen, Hinweisschilder, etc.. Nicht nur an Fassadenwänden angebrachte Befestigungsanker sind mit Hilfe des lösungsgemäßen Systems überwachbar, sondern auch an Tragwerkskonstruktionen, wie bspw. Befestigungsmasten, angebrachte Befestigungsanker, bspw. zur Lastaufnahme von Seilbahn-Tragseilen, elektrischen Oberleitungen etc. können mit dem lösungsgemäßen Überwachungssystem zuverlässig überwacht werden.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Darstellung eines Befestigungsanker-Tragseil-Verbundes in einem in Ordnung befindlichen Betriebszustand,
- Fig. 2: Befestigungsanker-Tragseil-Verbund im Schadenfall mit defektem Befestigungsanker,
- Fig. 3: Befestigungsanker-Tragseil-Verbund im Schadenfall mit defektem Tragseil,
- Fig. 4: System zur Überwachung des Befestigungsanker-Tragseil-Verbundes,
- Fig. 5a, b: Darstellung eines Befestigungsankers mit zusätzlichen Abstandssensoren,
- Fig. 6: Darstellung eines Befestigungsankers mit zusätzlicher Ultraschallüberwachung von Befestigungsschrauben sowie
- Fig. 7: Befestigungsanker-Tragseil-Verbund mit zusätzlichen Dehnungsmessstreifen sowie Stromsensor.

### Wege zur Ausführung der Erfindung, gewerbliche Verwendbarkeit

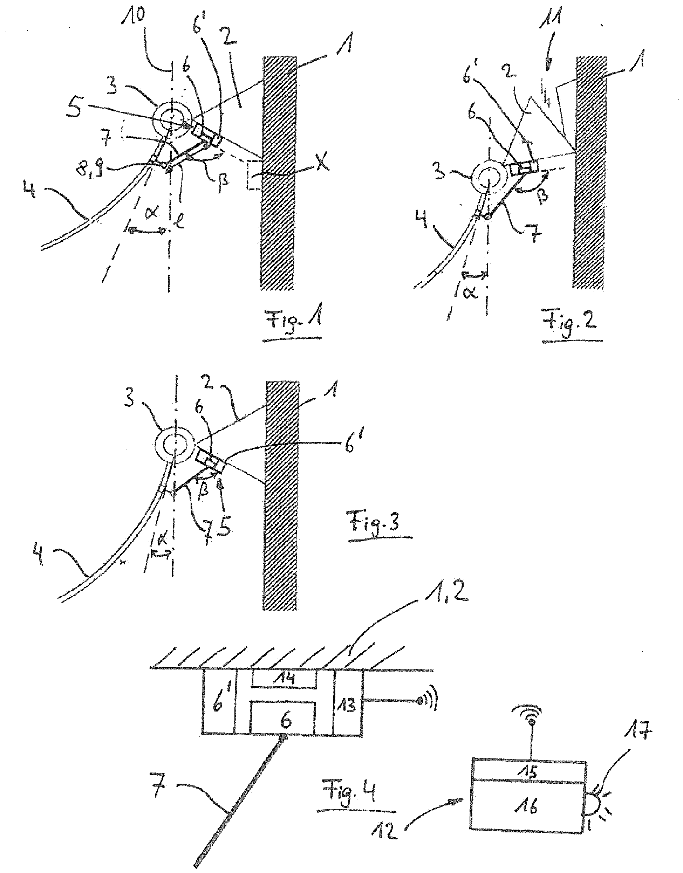

Figur 1 zeigt einen Befestigungsanker-Tragseil-Verbund in einem normalen, d. h. in Ordnung befindlichen Zustand. An einer Tragstruktur 1, typischerweise eine Hauswand bzw. Wandfassade, ist ein Befestigungsanker 2 festmontiert, der eine Befestigungsstruktur 3 zur endseitigen Anbringung eines gespannten Tragseils 4 vorsieht. Bei einem schadensfreien Befestigungsanker-Tragseil-Verbund unter einer annähernd statischen Lastsituation, kann der Winkel α, unter dem das Tragseil vom Befestigungsanker abgeht, im Allgemeinen sowie auch unter Berücksichtigung von Störgrößen, wie bspw. tageszeitbedingter, temperaturabhängiger Längenveränderung oder betriebsbedingter sowie auch witterungsbedingter Vibrationen des Tragseils, im zeitlichen Mittel als konstant angenommen werden.

Treten im Befestigungsanker-Tragseil-Verbund Änderungen auf, die zu einer dauerhaften mechanischen Verformung einzelner oder aller Komponenten führen, so verändert sich auch der Winkel α zwischen dem Befestigungsanker 2 und dem Tragseil 4 dauerhaft gegenüber einem Ausgangswert, einem sog. Sollwinkel.

Durch die lösungsgemäße Überwachung des Winkel α zwischen dem Befestigungsanker 2 und dem räumlichen Verlauf des Tragseils, unter dem das Tragseil vom Befestigungsanker 2 abgeht, können potentiell schadhafte Veränderungen im Befestigungsanker-Tragseil-Verbund erfasst werden.

Zu diesem Zweck gilt es die räumliche Konstellation des Tragseils 4 relativ zum Befestigungsanker 2, der fest an der Tragstruktur 1 angebracht ist, zu überwachen.

In Figur 1 ist hierzu am Befestigungsanker 2 eine Baueinheit 5 fest angebracht, die eine Lageerfassungseinheit, umfassend zumindest einen Inkrementalgeber 6 und ein stangenförmiges Armelement 7, dessen dem Inkrementalgeber 6 gegenüberliegendes Armende mittel- oder unmittelbar längs des Tragseils 4 gefügt ist. Der Inkrementalgeber 6 und das mit diesem verbundene Armelement 7 besitzt die Funktion analog eines Joysticks, der eine Lage- bzw. Winkeländerung des drehbeweglichen Armelementes 7 relativ zu einer Bezugsraumrichtung erfasst. Das drehbeweglich angeordnete Armelement 7 ist vorzugsweise über eine Gelenkeinheit 9, die vorzugsweise als Kugelgelenkt ausgebildet ist, mit dem Tragseil 4 fest verbunden und darüber hinaus in deren axialer Richtung längenveränderlich ausgebildet. Das Armelement 7 verfügt hier z. B. über einen Teleskopmechanismus.

Ändert sich der Winkel α, unter dem das Tragseil 4 den Befestigungsanker 2 verlässt, z. B. durch Deformation des Befestigungsankers 2 oder durch Dehnung des Tragseils 4, so überträgt sich diese räumliche Lageänderung auf das drehbewegliche Armelement 7, dessen Drehbewegung vom Inkrementalgeber 6 sensorisch erfasst wird. Der seitens des Inkrementalgebers 6 gemessene Winkel β steht somit in raumfester Beziehung zum Winkel α, der sich in Kenntnis der vertikalen Raumachse 10 aus dem sensorisch gemessenen Winkel β ergibt. Die räumliche Orientierung der vertikalen Achse 10, die vorzugsweise als räumliche Referenzachse verwendet wird, wird mit Hilfe eines Beschleunigungssensors 6', der zusammen mit dem Inkrementalgeber 6 am Ort der Baueinheit 5 angeordnet ist, erfasst.

Alternativ zu der in Figur 1 illustrierten Anordnung kann die Baueinheit 5 samt Inkrementalgeber 6, dem an diesem drehbeweglich angeordneten Armelement 7 sowie dem Beschleunigungssensor unmittelbar an der Tragstruktur 1 in unmittelbarer Nähe zum Befestigungsanker 2, siehe strichlierten Ort X, angebracht sein.

Alternativ oder in Kombination zur messtechnischen Erfassung der Winkel α, β kann der Inkrementalgeber 6 auch in Form eines Längensensors ausgebildet sein, der eine Längenänderung der Armlänge l des Armelementes 7 erfasst.

Weiterhin ist es alternativ möglich, das Armelement 7 mit einer konstanten Armlänge l auszubilden. Hierzu ist es jedoch vorteilhaft, das Armelementende 8 lose gleitend längs des Tragseils 4 zu fügen. Eine Möglichkeit hierzu besteht durch eine ringförmige Ausbildung am Armelementende 8, durch die das Tragseil 4 lose führbar ist.

In Figur 2 ist ein Schadensfall illustriert, bei dem der Befestigungsanker 2 Schaden genommen hat, bspw. durch einen Bruch 11, wodurch der Befestigungsanker 2 eine geänderte Raumlage relativ zur Tragstruktur 1 einnimmt. In Folge des in Figur 2 illustrierten Schadens ändern sich sowohl die Winkelgrößen α, β als auch, im Falle eines längenveränderlichen Armelementes 7, dessen Armlänge l. Mit Hilfe des Inkrementalgebers 6 kann die sich veränderte räumliche Lage des Befestigungsankers 2 relativ zur Tragstruktur 1 anhand der sich ändernden Messgrößen α, β, l eindeutig festgestellt werden.

Figur 3 stellt ein Szenario dar, bei dem der Befestigungsanker 2 ohne Schaden ist, jedoch das Tragseil 4 eine schadhafte Dehnung bzw. Längung erfahren hat, die zu einer intolerablen Durchhängung am Tragseil 4 führt. Auch in diesem Falle ändern sich die Winkelwerte α, β sowie ggf. die Länge l des Armelementes 7 im Falle eines längenveränderlichen Armelementes 7, wodurch ein Schaden am Befestigungsanker-Tragseil-Verbund messtechnisch erfassbar ist.

In Figur 4 ist ein System zur Überwachung des Befestigungsanker-Tragseil-Verbundes illustriert, das aus der unmittelbar am Befestigungsanker 2 oder der Tragstruktur 1 angebrachten Baueinheit 5 sowie einer separat zu dieser ausgebildeten zweiten Baueinheit 12 besteht. Die am Befestigungsanker 2 oder der Tragstruktur 1 unmittelbar angebrachte Baueinheit 5 umfasst neben dem bereits erwähnten Inkrementalgeber 6 und dem damit drehbeweglich angeordneten Armelement 7, dem Beschleunigungssensor 6', zumindest eine erste Datenübermittlungseinheit 13 sowie eine elektrische Energieversorgungseinheit 14, die einen möglichst autonomen Betrieb gewährleistet. Die über die Datenübermittlungseinheit 13 übertragenen Messsignale werden zur zweiten Baueinheit 12 übertragen, die gleichfalls eine Datenübermittlungseinheit 15 sowie eine Steuer- und Auswerteeinheit 16 umfasst. Auf der Grundlage eines Entscheidungskriteriums und den empfangenen Messsignalen, die ursprünglich vom Inkrementalgeber 6 herrühren, wird bei Eintreten eines Entscheidungskriteriums ein Signal 17 erzeugt, das bspw. in Form eines akustisch, optisch oder haptisch wahrnehmbaren Warnsignals abgegeben wird. Alternativ oder in Kombination kann das Signal 17 auch an eine externe weitere Station übermittelt werden.

Das in Figur 4 schematisiert dargestellte lösungsgemäße System zur Überwachung des Befestigungsanker-Tragseil-Verbundes kann autonom und vorzugsweise in regelmäßigen zeitlichen Abständen Messungen zur Erfassung der Lageveränderungen vornehmen und die so erhobenen Messsignale an eine externe Leitstelle übermitteln.

Durch eine kontinuierliche oder periodische autonome Überwachung des Befestigungsanker-Tragseil-Verbundes können frühzeitig Schädigungen an sämtlichen Komponenten erkannt werden und entsprechende Gegenmaßnahmen rechtzeitig eingeleitet werden, bevor es zu einem Totalausfall kommt. Durch die messtechnische Erfassung können quantitative Aussagen über den Grad der Verformung bzw. der Schädigung getroffen werden, so dass auf einen subjektiven zumeist optischen Prüfeindruck eines Prüfers vor Ort verzichtet werden kann.

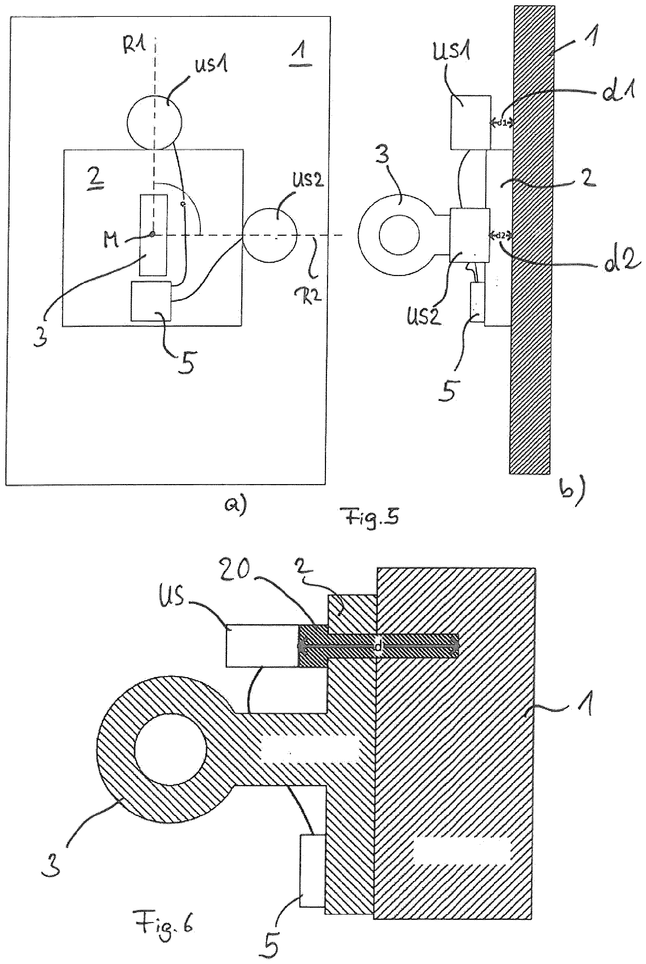

Um Lageänderungen des Befestigungsankers 2 relativ zur Tragstruktur 1 von Lageänderungen des Tragseils 4 zu unterscheiden, ist es vorteilhaft ausschließlich die Position und Lage des Befestigungsankers 2 relativ zur Tragstruktur 1 separat überwachen zu können. Hierzu ist in den Figuren 5a, b eine Drauf- und Seitendarstellung eines an einer Tragstruktur 1 angebrachten Befestigungsankers 2 dargestellt, an dem zusätzlich zwei Ultraschallsensoren US1, US2 angebracht sind, deren Ultraschallfelder möglichst orthogonal zur Oberfläche der Tragstruktur 1 abschallen und die darüber hinaus jeweils in einem Abstand d1, d2 von der Oberfläche der Tragstruktur 1 beabstandet angeordnet sind. Beide Ultraschallsensoren US1, US2 sind jeweils längs sich orthogonal schneidenden Raumachsen R1, R2 relativ zum Befestigungsanker 3 angebracht, die sich im Mittelpunkt M des Befestigungsankers 2 schneiden, siehe Figur 5a. Die Ultraschallsensoren überwachen auf der Grundlage der Impuls-Echomethode die Abstände d1, d2. Ändert sich wenigstens einer der gemessenen Abstände, so deutet dies auf eine Lageänderung des Befestigungsankers 2 relativ zur Oberfläche der Tragstruktur 1 hin. Vorzugsweise können die Ultraschallsensoren US1, US2 innerhalb der Baueinheit 5 integriert sein, um auf diese Weise eine kompakte Mess- und Überprüfungseinheit zu gewährleisten.

Alternativ zur Messung der Lage des Befestigungsankers 2 mit Hilfe der in Figur 5a, b illustrierten Ultraschall-Abstandsmessung kann diese Messung auch analog unter Nutzung von auf Reflexion basierenden Verfahren, wie Laser oder Radar erfolgen.

Figur 6 illustriert eine weitere Überprüfungsmöglichkeit mit der der Zustand wenigstens einer Befestigungsschraube 20, die der Befestigung des Befestigungsankers 2 an einer Tragstruktur 1 dient, überprüft werden kann. Hierzu wird mit Hilfe eines Ultraschallwandlers US eine ultraschallbasierte Laufzeitmessung in Längsrichtung in der Befestigungsschraube 20 durchgeführt. Bereits geringfügige Lageänderungen der Befestigungsschraube 20 und damit einhergehende Deformationen der Befestigungsschraube können mit Hilfe der ultraschallbasierten Laufzeitmessung detektiert werden, um so außergewöhnliche Zugbelastungen bzw. bevorstehende Ablösungen des Befestigungsankers 2 von der Tragstruktur 1 vorausschauend detektieren zu können. Vorzugsweise sitzt der Ultraschallwandler US derart am Schraubenkopf der Befestigungsschraube 20 auf, so dass ihre Schallkeule in axialer Richtung der Schraube zu liegen kommt und somit eine Messung der Ultraschalllaufzeit in Schraubenlängsrichtung möglich ist.

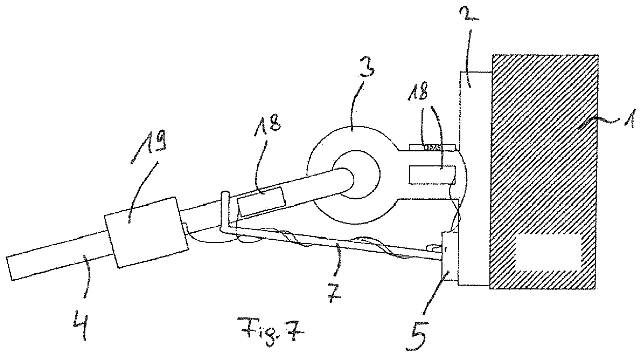

Figur 7 zeigt den zusätzlichen Einsatz von Dehnungsmessstreifen 18, die unmittelbar am Befestigungsanker 2 selbst und/oder am Tragseil 4 angebracht sind. Auf diese Weise werden sowohl lastbedingte Verformungen und ggf. bevorstehendes Materialversagen sowohl seitens des Befestigungsankers 2 als auch am Tragseil 4 erfasst.

Zusätzlich zur Erfassung mechanischer Deformationsparameter mittels Dehnungsmessstreifen 18 kann, sofern der Befestigungsanker 2 elektrisch geerdet ist, ein weiterer Sensor 19 am Tragseil 4 befestigt werden, der analog zur Funktion einer Stromzange einen möglicherweise im Tragseil 4 fließenden Strom zu erfassen vermag und auf diese Weise die Detektion von durch Funktionsstörungen verursachte Fehlströmen oder von Ereignissen, wie bspw. Blitzeinschlag oder ähnlichen Erscheinungen, verursachte Ableitströmen ermöglicht. Die für den Betrieb der Dehnungsmessstreifen 18 sowie auch des zusätzlichen Stromsensors 19 erforderliche elektrische Zuleitungen können vorzugsweise längs des Armelementes 7 stabilisiert und mit der am Befestigungsanker 2 angeordneten Baueinheit 5 verbunden werden.

### Bezugszeichenliste

- 1: Tragstruktur
- 2: Befestigungsanker
- 3: Befestigungsstruktur
- 4: Tragseil
- 5: Baueinheit
- 6: Inkrementalgeber
- 6': Beschleunigungssensor
- 7: Armelement
- 8: Armelementende
- 9: Gelenkeinheit
- 10: vertikale Raumachse
- 11: Bruch
- 12: zweite Baueinheit
- 13: Datenübermittlungseinheit
- 14: Energieversorgungseinheit
- 15: Datenübermittlungseinheit
- 16: Steuer- und Auswerteeinheit
- 17: Signal, Signaleinheit
- 18: Dehnungsmessstreifen
- 19: Stromsensor
- 20: Befestigungsschraube
- l: Armelementlänge
- US, US1, US2: Ultraschallwandler

## Patentansprüche

1. System zur Überwachung eines Befestigungsanker-Tragseil-Verbundes mit einem an Gebäudewänden oder Tragwerkskonstruktionen angebrachten Befestigungsanker für Abspannseile für Straßenbeleuchtungen, oder Abspannseile in Form von Oberleitungen, Hochspannungsleitungen oder Seilbahn-Tragseilen, mit einer Vorrichtung zur Erfassung der Relativlage zwischen einem stationär an einer Tragstruktur (1) angebrachten Befestigungsanker (2) und einem endseitig am Befestigungsanker (2) angebrachten, gespannten Tragseil (4), mit einer Lageerfassungseinheit, die mittel- oder unmittelbar am Befestigungsanker (2) oder an der Tragstruktur (1) angebracht ist und einen Inkrementalgeber (6) sowie ein Armelement (7) mit zwei Armenden umfasst, dessen eines Armende mit dem Inkrementalgeber (6) und dessen anderes Armende mittel- oder unmittelbar am Tragseil (4) gefügt ist,
wobei eine mit dem Inkrementalgeber (6) verbundene Energieversorgungseinheit (14) sowie eine erste Datenübermittlungseinheit (13) vorgesehen sind, die gemeinsam mit der Lageerfassungseinheit in Form einer Baueinheit (5) zusammengefasst sind, die an der Tragstruktur (1) oder am Befestigungsanker (2) angebracht ist, und
eine zweite Datenübermittlungseinheit (15) sowie eine Steuer- und Auswerteinheit (16) getrennt zur Tragstruktur (1) vorgesehen sind, die auf der Grundlage von seitens der ersten Datenübermittlungseinheit (13) übermittelten Daten sowie einem Entscheidungskriterium ein Signal erzeugt.

2. System nach Anspruch 1,
**dadurch gekennzeichnet, dass** die Baueinheit (5) einen optischen und/oder schallakustischen Abstandssensor aufweist.

3. System nach Anspruch 1 oder 2,
**dadurch gekennzeichnet, dass** wenigstens ein Dehnungsmessstreifen (18) vorgesehen ist, der mit der Baueinheit (5) oder mit dem Armelement (7) verbunden ist.

4. System nach einem der Ansprüche 1 bis 3,
**dadurch gekennzeichnet, dass** die Baueinheit (5) eine Induktionsspule und/oder einen Hallsensor vorsieht.

5. System nach einem der Ansprüche 1 bis 4,
**dadurch gekennzeichnet, dass** der Inkrementalgeber (6) in Form eines Winkelsensors ausgebildet ist, der einen Winkel zwischen einer beide Armenden (8) durchsetzenden Geraden und einer fest vorgegebenen Raumachse erfasst.

6. System nach einem der Ansprüche 1 bis 5,
**dadurch gekennzeichnet, dass** die Lageerfassungseinheit einen Beschleunigungssensor (6') zur Erfassung der vertikalen Raumachse aufweist, die der fest vorgegebenen Raumachse entspricht.

7. System nach einem der Ansprüche 1 bis 6,
**dadurch gekennzeichnet, dass** das Armelement (7) stangenförmig mit einer unveränderlichen Armlänge ausgebildet ist, und
dass das andere Armende längsbeweglich relativ zur Längserstreckung des Tragseils (4) gefügt ist.

8. System nach einem der Ansprüche 1 bis 6,
**dadurch gekennzeichnet, dass** das Armelement (7) stangenförmig mit einer veränderlichen Armlänge ausgebildet ist, und
dass das andere Armende ortsfest relativ zum Tragseil (4) gefügt ist.

9. System nach Anspruch 8,
**dadurch gekennzeichnet, dass** das Armelement (7) einen Teleskopmechanismus aufweist.

10. System nach Anspruch 8 oder 9,
**dadurch gekennzeichnet, dass** der Inkrementalgeber (6) in Form eines Längenänderungssensors ausgebildet ist, der eine Änderung der Armlänge des Armelementes (7) erfasst.

11. System nach einem der Ansprüche 1 bis 10,
**dadurch gekennzeichnet, dass** das andere Armende über eine am Tragseil (4) angebrachte Gelenkeinheit (9) gefügt ist.

12. System nach Anspruch 11,
**dadurch gekennzeichnet, dass** die Gelenkeinheit (9) in Form eines Einachsgelenkes, eines Zweiachsgelenkes oder eines Kugelgelenkes ausgebildet ist.

## Claims

1. System for monitoring a fixing anchor - carrying cable combination comprising a fixing anchor attached to building walls or support structures for tensioned cables for street lighting or tensioned cables in the form of overhead lines, high-voltage lines or cable car carrying cables, comprising a device for detecting the relative position between a stationary fixing anchor (2) attached to a support structure (1) and a tensioned carrying cable (4) attached to the fixing anchor (2) at the end, comprising a position detection unit that is directly or indirectly attached to the fixing anchor (2) or to the support structure (1) and includes an incremental encoder (6) as well as an arm element (7) with two arm ends, whose one arm end is joined directly or indirectly to the incremental encoder (6) and the other arm end is joined directly or indirectly to the carrying cable (4), wherein a power supply unit (14) connected to the incremental encoder (6) and a first data transmission unit (13) are provided, which are combined jointly with the position detection unit in the form of a structural unit (5) which is attached to the carrying structure (1) or to the fixing anchor (2) and a second data transmission unit (15) as well as a control and evaluation unit (16) are provided separately to the support structure (1) which generates a signal on the basis of data transmitted by the first data transmission unit (13) and a decision criterion.

2. System according to Claim 1, **characterized in that** the structural unit (5) has an optical and/or acoustic-sound distance sensor.

3. System according to Claim 1 or 2, **characterized in that** at least one strain gauge (18) is provided which is connected to the structural unit (5) or to the arm element (7).

4. System according to one of Claims 1 to 3, **characterized in that** the structural unit (5) provides an induction coil and/or a Hall sensor.

5. System according to one of Claims 1 to 4, **characterized in that** the incremental encoder (6) is configured in the form of an angle sensor which detects an angle between a straight line passing through both arm ends (8) and a fixedly predefined spatial axis.

6. System according to one of Claims 1 to 5, **characterized in that** the position detection unit has an acceleration sensor (6') for detecting the vertical spatial axis, which corresponds to the fixedly predefined spatial axis.

7. System according to one of Claims 1 to 6, **characterized in that** the arm element (7) is configured to be rod-shaped with an unchangeable arm length, and **in that** the other end of the arm is joined so that it can move longitudinally relative to the longitudinal extension of the carrying cable (4).

8. System according to one of Claims 1 to 6, **characterized in that** the arm element (7) is configured to be rod-shaped with a variable arm length, and **in that** the other end of the arm is joined in a fixed position relative to the carrying cable (4).

9. System according to Claim 8, **characterized in that** the arm element (7) has a telescopic mechanism.

10. System according to Claim 8 or 9, **characterized in that** the incremental encoder (6) is configured in the form of a length change sensor which detects a change in the arm length of the arm element (7).

11. System according to one of Claims 1 to 10, **characterized in that** the other end of the arm is joined via a joint unit (9) attached to the carrying cable (4).

12. System according to Claim 11, **characterized in that** the joint unit (9) is configured in the form of a single-axis joint, a two-axis joint or a ball joint.

## Revendications

1. Système de surveillance d'une liaison ancre de fixation-câble porteur comportant une ancre de fixation fixé aux murs de bâtiment ou aux structures porteuses pour haubans pour l'éclairage public ou pour haubans sous forme de lignes aériennes, de lignes à haute tension ou de câbles porteurs de téléphériques, comportant un dispositif pour détecter la position relative entre un objet monté de manière stationnaire sur une structure porteuse (1) et un câble porteur tendu (4) fixé à l'extrémité de l'ancre de fixation (2), comportant une unité de détection de position qui est fixée directement ou indirectement à l'ancre de fixation (2) ou est fixé à la structure porteuse (1) et comprend un codeur incrémentiel (6) et un élément de bras (7) avec deux extrémités de bras, dont une extrémité de bras est reliée au codeur incrémental (6) et dont l'autre extrémité de bras est reliée directement ou indirectement au câble porteur (4), dans lequel une unité d'alimentation en énergie (14) connectée au codeur incrémental (6) et une première unité de transmission de données (13) sont prévues, qui sont combinées avec l'unité de détection de position sous la forme d'une unité structurelle (5) qui est fixée à la structure de support (1) ou à l'ancre de fixation (2) et
une deuxième unité de transmission de données (15) et une unité de commande et d'évaluation (16) sont prévues séparément de la structure de support (1), qui génère un signal sur la base des données transmises par la première unité de transmission de données (13) et d'un critère de décision.

2. Système selon la revendication 1,
**caractérisé en ce que** l'unité structurelle (5) présente un capteur de distance optique et/ou acoustique.

3. Système selon la revendication 1 ou 2,
**caractérisé en ce qu'** il est prévu au moins une jauge de contrainte (18) qui est reliée à l'unité structurelle (5) ou à l'élément de bras (7).

4. Système selon une quelconque des revendications 1 à 3, **caractérisé en ce que** l'unité structurelle (5) fournit une bobine d'induction et/ou un capteur Hall.

5. Système selon une quelconque des revendications 1 à 4, **caractérisé en ce que** le codeur incrémentiel (6) est conçu sous la forme d'un capteur d'angle qui détecte un angle entre une droite passant par les deux extrémités du bras (8) et un axe spatial fixe.

6. Système selon une quelconque des revendications 1 à 5, **caractérisé en ce que** l'unité de détection de position comporte un capteur d'accélération (6') pour détecter l'axe spatial vertical, qui correspond à l'axe spatial spécifié en permanence.

7. Système selon une quelconque des revendications 1 à 6, **caractérisé en ce que** l'élément de bras (7) est en forme de tige avec une longueur de bras fixe, et
**que** l'autre extrémité du bras est jointe de manière à pouvoir se déplacer longitudinalement par rapport à l'extension longitudinale du câble porteur (4).

8. Système selon une quelconque des revendications 1 à 6, **caractérisé en ce que** l'élément de bras (7) est en forme de tige avec une longueur de bras variable, et que l'autre extrémité du bras est jointe de manière fixe par rapport au câble porteur (4).

9. Système selon la revendication 8,
**caractérisé en ce que** l'élément de bras (7) présente un mécanisme télescopique.

10. Système selon la revendication 8 ou 9,
**caractérisé en ce que** le codeur incrémentiel (6) est réalisé sous la forme d'un capteur de variation de longueur, qui détecte une variation de la longueur du bras de l'élément de bras (7).

11. Système selon une quelconque des revendications 1 à 10,
**caractérisé en ce que** l'autre extrémité du bras est reliée via une unité de jointure (9) fixée au câble porteur (4).

12. Système selon la revendication 11,
**caractérisé en ce que** l'unité de jointure (9) est réalisée sous la forme d'une articulation à un seul axe, une articulation à deux axes ou une rotule.
